# EUROPÄISCHE PATENTSCHRIFT

(11) **EP 0 549 829 B1**
(45) Veröffentlichungstag und Bekanntmachung des Hinweises auf die Patenterteilung: **13.03.1996**
(21) Anmeldenummer: 91122409.5
(22) Anmeldetag: 31.12.1991
(51) Int. Cl.: F24J 2/40, E04H 4/12, G05D 23/19

(54) **Solarheizungs-Ventileinheit und Verwendung für eine Schwimmbadheizung**
Valve assembly for solar heating and use for heating a swimming pool
Dispositif de clapet pour chauffage solaire et utilisation pour un chauffage de piscine

(43) Veröffentlichungstag der Anmeldung: 07.07.1993
(73) Patentinhaber: Roos, Franz, D-63674 Altenstadt (DE)
(72) Erfinder: Roos, Franz, D-63674 Altenstadt (DE)
(74) Vertreter: Grimm, Ekkehard, Dipl.-Phys.

(56) Entgegenhaltungen:
- DE-A- 3 112 469
- DE-A- 3 515 590
- FR-A- 2 534 660
- US-A- 4 261 332
- US-A- 4 307 707
- US-A- 4 398 562
- US-A- 4 644 935

## Beschreibung

Die Erfindung betrifft eine Solarheizungs-Ventileinheit, bestehend aus einem Ventilgehäuse mit mindestens einem Zu- und mehreren Abläufen, einem in dem Ventilgehäuse drehbar angeordneten Ventilkörper, der mit einem Steuerhahn und ggf. einem Stellmotor verbunden ist, zwei Temperaturfühlern und mindestens einer Energiequelle zur Versorgung von Stellmotor und Temperaturfühlern sowie seine Verwendung für eine Schwimmbadheizung.

Schwimmbadheizungen sind üblicherweise mit einem Steuerhahn versehen,der die Wasserzufuhr zu den Solarkollektoren/Absorbern bzw. zum Schwimmbecken steuert bzw. regelt. Der Steuerhahn wird vorzugsweise aus Kunststoff hergestellt damit er auch nach längerer Beanspruchung und ggf. nach Ablagerungen aus dem Wasser noch gut drehbar und bei verschiedenen Temperaturen einsetzbar ist.

Der Steuerhahn kann als 2-, 3- oder Mehrfachwegehahn zur Steuerung der Wasserzufuhr zu Solarabsorbern eingesetzt werden, wobei die Hähne mittels Klebetechnik oder auch durch Verflanschung sowohl bei neu erbauten als auch bei bereits vorhandenen Schwimmbadanlagen eingebaut werden können.

Sie leiten das zu erwärmende Wasser mittels einer im Filter vorhandenen Pumpe entweder direkt in das Schwimmbad oder in einen separaten Wasserbehälter oder zu den Solarkollektoren/Absorbern. Das dort erwärmte Wasser fließt dann über entsprechende Leitungen in das Behältnis zurück.

Überwiegend werden die Steuerhähne über Elektro-Getriebemotoren betätigt. Durch eine separat angebrachte Meßeinrichtung wird die Temperaturdifferenz zwischen dem kälteren, aus dem Schwimmbad-Wasserbehälter entnommenen Schwimmbadwasser und der im Solarkollektor/Absorber entstehenden Temperatur gemessen. Bei einer Temperaturdifferenz von mehr als 4°C schaltet der Getriebemotor den Steuerhahn in der Weise, daß das kältere Wasser über den Kollektor fließt und dort erwärmt wird.

Zur Herstellung des in der Rohrleitung zwischen Schwimmbad und Steuerhahn eingebauten Kaltwasser-Meßfühlers muß die Rohrleitung unterbrochen werden, um die entsprechenden Fittinge, Dichtungen u.a. Zubehörteile einzubauen. Hierfür wird zunächst Platz benötigt, der gerade bei einem nachträglichen Einbau im Filterbereich oftmals nicht vorhanden ist. Ferner werden entsprechend lange Meßkabel benötigt, die gemäß ihrer Länge störanfällig sind und durch Knickstellen bzw. im Außenbereich durch Witterungseinflüsse gefährdet sind.

Die Umrüstung von bereits vorhandenen mechanisch betätigten Steuerhähnen auf einen Elektrobetrieb ist sehr aufwendig, weil hierzu nicht nur die Meßstellen für die Temperaturfühler geschaffen werden müssen, sondern auch ein separates Steuergerät untergebracht werden muß, das von einem Spezialisten angeschlossen wird, da an der Zuleitung zum Steuergerät 220 Volt anliegen, wodurch in wasserführenden Bereichen, wie z.B. Schwimmbadanlagen, eine hohe Verletzungsgefahr durch Stromschläge gegeben ist.

Bisher wurden die Meßgeräte für die Ansteuerung des Motorantriebs immer räumlich getrennt von diesem angeordnet, was nicht nur die erwähnten Probleme bei der Verkabelung und Meßfühler-Länge mit sich bringt, sondern auch Anpassungsprobleme bei den elektronischen Bauelementen.

Aus der US-A-4 261 332 ist ein Solarheizsystem für ein Schwimmbad mit einer Solarheizungs-Ventileinheit bekannt, bei dem ein Ventil, ein Stellmotor und ein Temperaturfühler für den Kaltwassereinlauf auf der Zulaufseite vor dem Eintritt in den Ventilkörper angeordnet sind. An dem obersten Punkt der Solaranlage ist ein Belüftungsventil angeordnet, das jedoch dahingehend nachteilig ist, daß durch diese Anordnung des Belüftungsventils die den Wasserfluß bewirkende Pumpe ständig gegen eine sehr hohe Wassersäule drücken muß und dadurch der Energieverbrauch entsprechend hoch ist.

Aufgabe der vorliegenden Erfindung ist es daher, eine einfach zu installierende und gefahrlos zu betreibende Solarheizungs-Ventileinheit zu entwickeln, die mit einem Minimum an Energie und möglichst kurzen Kabellängen auskommt und mit der die Genauigkeit der Temperaturregelung verbessert wird. Eine besondere Aufgabe besteht darin die Solarheizungs-Ventileinheit an die Bedürfnisse einer Schwimmbadheizungs-Anlage anzupassen.

Die Aufgabe wird erfindungsgemäß durch die in den Patentansprüchen angegebenen Merkmale gelöst.

Es hat sich gezeigt, daß durch die erfindungsgemäße Zusammenfassung von Stellmotor, Steuerhahn, Ventilkörper, Regeleinheit und Temperaturfühler zu einer Baueinheit eine kompakte, leicht nachrüstbare und schnell sowie feinfühlig reagierende Solarheizungs-Ventileinheit geschaffen wird.

Die Erfindung ermöglicht es, die gesamte Meß- und Steuereinheit sicherer gegen Elekto-Unfälle und weniger störanfällig herzustellen. Auch Nichtfachkräfte können die Solarheizungs-Ventileinheit einbauen und in Betrieb nehmen.

Die erfindungsgemäße Solarheizungs-Ventileinheit kann durch einen mit Stecker ausgerüsteten Kompakttrafo mit einer Ausgangsleistung von 2 x 12 V betrieben werden, so daß durch die niedrige Spannung keine Verletzungsgefahr auch im wasserführenden Teil der Anlage besteht.

Durch die Anbringung einer Meßstelle direkt beim kalten einfließenden Wasser in den Steuerhahn bleibt das Fühlerkabel sehr kurz und kann fertig montiert geliefert werden. Auch das Fühlerkabel des Solarfühlers kann direkt mit dem Solarheizungs-Steuerhahn verbunden werden, so daß eine mobile verkaufsfertige Betriebseinheit entsteht.

Es ist besonders vorteilhaft, wenn durch Hintereinanderschaltung von 2 x 12 V die an sich für die Regelungseinheit benötigte Spannung derartig angepaßt werden kann, daß auch der Stellmotor damit betreibbar ist. So werden weniger Bauteile, kürzere Kabellängen und kompaktere Gehäuseeinheiten ermöglicht.

Im folgenden wird die Erfindung anhand eines Ausführungsbeispieles näher erläutert.

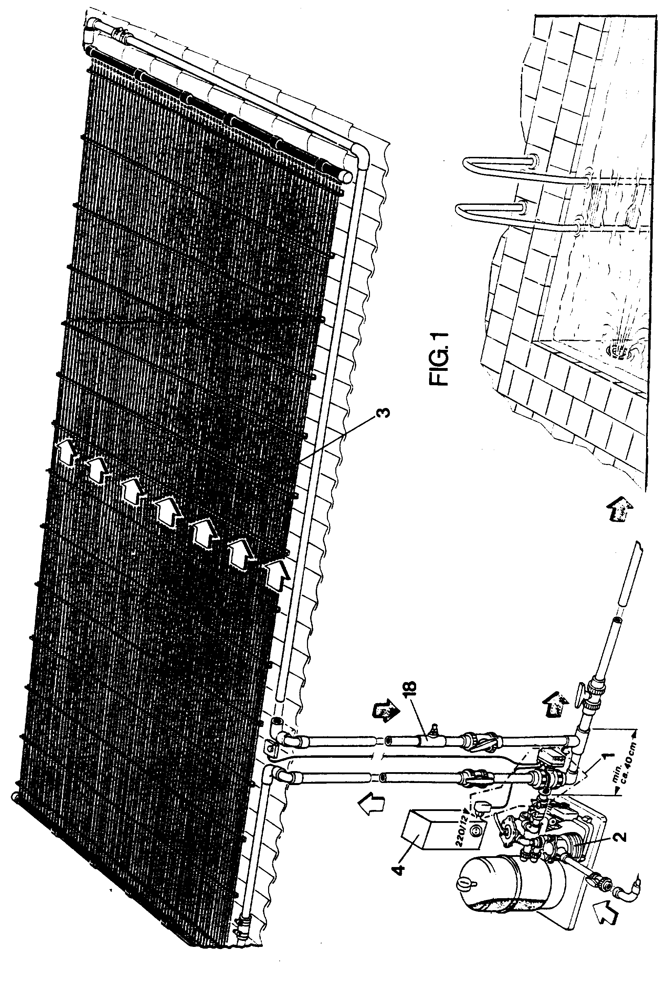

Es zeigt
- Figur 1: eine perspektivische Ansicht einer Schwimmbadheizungs-Anlage mit der erfindungsgemäßen Solarheizungs-Ventileinheit und
- Figur 2: eine Ausschnittvergrößerung des Teils der Anlage der Figur 1, der mit einer strichpunktierten Linie umrandet und mit dem Bezugszeichen 1 bezeichnet ist, in einer schematischen Darstellung.

Die Schwimmbadheizungs-Anlage besteht aus der Solarheizungs-Ventileinheit, der Pumpe 2, dem Solarabsorber 3 und der Energiequelle 4. Die Solarheizungs-Ventileinheit besteht wiederum aus einem Ventilgehäuse 5, einem Ventilkörper 6, einem Steuerhahn 7, einem Stellmotor 8, Temperaturfühlern 9.2 und 10, einem Niederspannungstrafo 11 sowie einer Regeleinheit 12. Der Temperaturfühler 9.2 weist ein Verbindungskabel 9.1 für den Temperaturfühler 9.2 aus einem elastischen Werkstoff auf, der eine Verspannung zwischen einem Reglerausgang 21 und dem Hülsenboden 9.3 des Temperaturfühlers 9.2 erzeugt. Die Reglereinheit 12 ist mit einem Niederspannungsausgang 19 der Energiequelle bzw. dem Niederspannungstrafo 11 verbunden und der Stellmotor 8 ist in Serie mit der Energieversorgung der Reglereinheit 12 und einem zweiten Niederspannungsausgang 20 der Energiequelle verbunden.

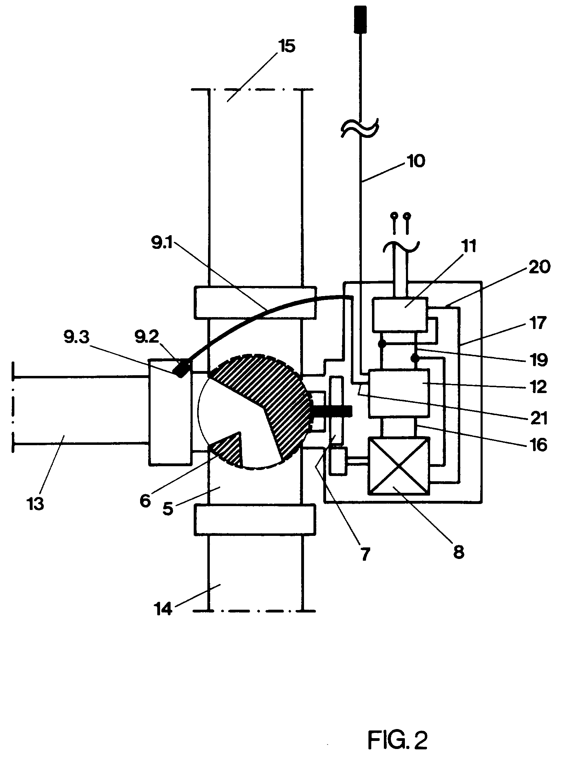

In Figur 2 ist der Zulauf für die Ventileinheit 13, der Ablauf zum Schwimmbad 14 und der Ablauf für den Solarabsorber 15 aufgeführt. Man erkennt, daß im Kaltwasserzulauf 13, vor dem Eintritt in das Ventilgehäuse, ein Temperaturfühler 9.2 angeordnet ist, der aufgrund der Eigenspannung des Kabels 9.1 einen festen Sitz im Gehäuse hat. Je nach dem,wie der Steuerhahn 7 den Ventilkörper 6 dreht, sind die Anschlüsse 13, 14, 15 miteinander verbunden. Der Steuerhahn 7 steht mit einem Stellmotor 8 in mechanischem Kontakt, wobei der Stellmotor 8 seine Steuerbefehle aus dem Regler 12 über die Leitung 16 erhält. Die Stromversorgung des Stellmotors 8 geschieht über die Leitung 17, die als Serienschaltung zwischen dem Niederspannungstrafo 11 und dem Regler 12 ausgebildet ist.

Sobald zwischen den Temperaturmeßfühlern 9.2 und 10 eine Temperaturdifferenz von mehr als 4 °C auftritt, schaltet der Regler 12 den Stellmotor in der Weise ein, daß die Rohranschlüsse 13 und 15 miteinander verbunden sind. Bei einer Temperaturdifferenz von weniger als 4°C werden die Rohrleitungsanschlüsse 13 und 14, wie in Figur 2 dargestellt, verbunden.

Die besonderen Vorteile der erfindungsgemäßen Solarheizungs-Ventileinheit bestehen in der leichten Montierbarkeit, die sogar für eine einfache Nachrüstung bereits bestehender mechanischer Anlagen geeignet ist,
sowie in ihrem präzisen Steuerungsverhalten. Durch die räumlich direkt in Verbindung stehenden Bauteile der Solarheizungs-Ventileinheit ist für ein kurzes Ansprechverhalten des Reglers und des Stellmotors gesorgt. Dieses wird noch weiter verbessert durch ein schnellschaltendes Magnetventil, das bei Temperaturänderungen, wie z.B. bei einem Absinken der Temperaturdifferenz unter 4°C oder bei einer Überschreitung eines Temperaturmaximums von 30°C, sofort reagiert. Dieses günstige Regelverhalten wird erst dadurch ermöglicht, daß in dem vom Absorber 3 kommenden Rohrleitungstrang ein automatisch arbeitendes Belüftungsventil 18 angeordnet ist. Dieses bewirkt einen Druckausgleich zwischen dem beim Umschalten des erfindungsgemäßen Solarheizungs-Ventils resultierenden Druckabfall und der Umgebungsluft. Dadurch werden Instabilitäten des Regelsystems sowie Druckschläge bei wechselnden Betriebsbedingungen vermieden.

## Patentansprüche

1. Solarheizungs-Ventileinheit (1) bestehend aus einem Ventilgehäuse (5) mit mindestens einem Zu- und mehreren Abläufen, einem in dem Ventilgehäuse (5) drehbar angeordneten Ventilkörper (6), der mit einem Steuerhahn (7) und ggf. einem Stellmotor (8) verbunden ist und mindestens einem Energieversorgungsteil (11) zur Versorgung von Stellmotor (8) und Temperaturfühlern (9.2, 10), wobei an dem Ventilgehäuse (5) eine Regeleinheit (12) und ggf. der Stellmotor (8) angeordnet sind, und die Regeleinheit (12) mit einem Temperaturfühler (9.2) für den Kaltwasserzulauf (13) und einem Temperaturfühler (10) für den Solarbetrieb ausgerüstet ist, und wobei der Temperaturfühler für den Kaltwasserzulauf (13) im Ventilgehäuse (5) auf der Zulaufseite unmittelbar vor dem Eintritt in den Ventilkörper (6) angeordnet ist,
dadurch gekennzeichnet,
daß der Temperaturfühler (9.2) für den Kaltwasserzulauf (13) in einer im Zulauf vor dem Ventilkörper (6) angeordneten Hülse steckt, wobei die Hülse in einem Winkel von 30° bis 90° gegen die Strömungsrichtung geneigt ist, und daß ein Verbindungskabel (9.1) zwischen der Regeleinheit (12) und dem Temperaturfühler (9.2) aus einem elastischen Werkstoff besteht, der eine Verspannung zwischen dem Reglerausgang (21) und dem Hülsenboden (9.3) erzeugt.

2. Solarheizungs-Ventileinheit nach einem der vorhergehenden Ansprüche,
dadurch gekennzeichnet,
daß die Regeleinheit (12) und ggf. der Stellmotor (8) auf der dem Kaltwasserzulauf (13) gegenüberliegenden Seite des Ventilgehäuses (5) angeordnet ist.

3. Solarheizungs-Ventileinheit nach einem der vorhergehenden Ansprüche,
dadurch gekennzeichnet,
daß die Regeleinheit (12) mit einem Niederspannungsausgang (19) des Energieversorgungsteils (11) verbunden ist und ggf. der Stellmotor (8) in Serie mit der Energieversorgung der Regeleinheit (12) und einem zweiten Niederspannungsausgang (20) des Energieversorgungsteils (11) verbunden ist.

4. Solarheizungs-Ventileinheit nach einem der vorhergehenden Ansprüche,
dadurch gekennzeichnet,
daß in einem ablaufseitigen Rohranschluß des Ventilgehäuses (5) ein Belüftungsventil (18) eingebaut ist, das bei einem Druckabfall im Rohrsystem automatisch einen Druckausgleich mit dem Umgebungsdruck herbeiführt.

5. Anwendung einer Solarheizungs-Ventileinheit nach einem der vorhergehenden Ansprüche für die Aufheizung von Schwimmbadwasser, wobei das aufzuheizende Schwimmbadwasser mit dem Saugrohr einer Pumpe verbunden ist und diese über das Ventilgehäuse (5) das aufzuheizende Wasser entweder in einen Solarkollektor/Absorber drückt oder in einer veränderten Stellung des Ventilkörpers (6) im Ventilgehäuse (5) das Wasser im Kreislauf in die Schwimmbadanlage zurückfördert,
dadurch gekennzeichnet,
daß die Solarheizungs-Ventileinheit (1) mit dem Temperaturfühler (9.2) im Kaltwasserzulauf (13) und mit dem Temperaturfühler (10) am Solarkollektor/Absorber verbunden ist, wobei bei einer Temperatur von größer als 4°C ein Stellmotor (8) bzw. ein Steuerhahn (7) den Ventilkörper (6) in Richtung Durchlaß zum Solarkollektor/Absorber verstellt, und daß bei einer Temperaturdifferenz kleiner als 4°C der Stellmotor (8) bzw. der Steuerhahn (7) den Ventilkörper (6) in Richtung Durchlaß zum Schwimmbad einstellt.

## Claims

1. A solar heating valve unit (1) comprising a valve casing (5) with at least one inlet and a number of outlets, a valve member (6) rotatably disposed in the valve casing (5) and connected to a control cock (7) and optionally to a servomotor (8), and at least one energy supply stage (11) for supplying the servomotor (8) and temperature sensors (9.2, 10), a control unit (12) and optionally the servomotor (8) being disposed on the valve casing (5), and the control unit (12) being equipped with a temperature sensor (9.2) for the cold water inlet (13) and a temperature sensor (10) for solar operation, and the temperature sensor for the cold water inlet (13) is disposed in the valve casing (5) on the inlet side immediately before the entry into the valve member (6),
characterised in that
the temperature sensor (9.2) for the cold water inlet (13) is inserted into a sleeve disposed in the inlet in front of the valve member (6), the sleeve being inclined at an angle of 30° to 90° to the direction of flow, and a connecting cable (9.1) between the control unit (12) and the temperature sensor (9.2) is made of a resilient material and produces bracing between the controller output (21) and the sleeve base (9.3).

2. A solar heating valve unit according to any of the preceding claims, characterised in that the control unit (12) and, if required, the servomotor (8) are disposed on the side of the valve casing (5) remote from the cold-water inlet (13).

3. A solar heating valve unit according to any of the preceding claims, characterised in that the control unit (12) is connected to a low-voltage output (19) of the energy supply stage (11) and if required the servomotor (8) is connected in series to the energy supply of the control unit (12) and to a second low-voltage output (20) of the energy supply stage (11).

4. A solar heating valve unit according to any of the preceding claims, characterised in that a venting valve (18) is incorporated in a pipe connection on the outlet side of the valve casing (5) and, in the event of a pressure drop in the pipe system, automatically equalises the pressure with the environment.

5. Use of a solar heating valve unit according to any of the preceding claims for heating swimming-pool water, the water for heating being connected to the suction tube of a pump which, via the valve casing (5), either drives the water for heating into a solar collector/absorber or returns the water in the circuit to the swimming-pool system, when the valve member (6) is in a different position in the valve casing (5),
characterised in that
the solar heating valve unit (1) is connected to the temperature sensor (9.2) in the cold water inlet (13) and to the temperature sensor (10) on the solar collector/absorber, and when the temperature is greater than 4°C a servomotor (8) or a control cock (7) moves the valve member (6) in the direction for admission to the solar collector/absorber, whereas at a temperature difference less than 4°C the servomotor (8) or the control cock (7) sets the valve member (6) in the direction for admission to the swimming pool.

## Revendications

1. Dispositif distributeur (1) de chauffage solaire, se composant d'une cage (5) de distributeur comprenant au moins une arrivée et plusieurs départ, d'un corps (6) de distributeur monté rotatif dans la cage (5) du distributeur et relié à un robinet de commande (7) et éventuellement à un servomoteur (8), ainsi que d'au moins un élément (11) d'alimentation en énergie pour l'alimentation du servomoteur (8) et des capteurs de température (9.2, 10), un système régulateur (12) et éventuellement le servomoteur (8) étant disposés sur la cage (5) du distributeur et le système régulateur (12) étant équipé d'un capteur (9.2) de la température de l'arrivée d'eau froide (13) et d'un capteur (10) de température du circuit solaire et le capteur de température de l'arrivée (13) d'eau froide étant disposé dans la cage (5) du distributeur, du côté arrivée, immédiatement devant l'entrée dans le corps (6) du distributeur,
caractérisé
en ce que le capteur (9.2) de température de l'arrivée (13) d'eau froide est logé dans une douille disposée dans l'arrivée, devant le corps (6) du distributeur, la douille étant inclinée d'un angle de 30° à 90° sur la direction de la circulation et en ce qu'un câble (9.1) de connexion entre le système régulateur (12) et le capteur de température (9.2) est en matériau élastique qui assure une fixation entre la sortie (21) du régulateur et le fond (9.3) de la douille.

2. Dispositif distributeur de chauffage solaire selon la revendication précédente,
caractérisé
en ce que le système régulateur (12) et éventuellement le servomoteur (8) sont disposés sur le côté de la cage (5) du distributeur qui est à l'opposé de celui de l'arrivée (13) d'eau froide.

3. Dispositif distributeur de chauffage solaire selon l'une des revendications précédentes,
caractérisé
en ce que le système régulateur (12) est connecté à une sortie basse tension (19) de l'élément d'alimentation en énergie (11) et le servomoteur éventuel (8) est monté en série avec l'alimentation en énergie du système régulateur (12) et avec une seconde sortie basse tension (20) de l'élément (11) d'alimentation en énergie.

4. Dispositif distributeur de chauffage solaire selon l'une des revendications précédentes,
caractérisé
en ce qu'une soupape de ventilation (18) montée dans un raccord coté départ de la cage (5) du distributeur produit automatiquement un équilibrage de pression avec la pression ambiante en cas de chute de pression dans le système de conduits.

5. Utilisation d'un dispositif distributeur de chauffage solaire selon l'une des revendications précédentes pour le chauffage de l'eau d'une piscine, l'eau de la piscine devant être chauffée étant raccordée à un conduit d'aspiration d'une pompe et celle-ci soit refoulant l'eau devant être chauffée par l'intermédiaire de la cage (5) du distributeur dans un collecteur/absorbeur solaire, soit ramenant l'eau dans le circuit de l'installation de la piscine lorsque la position du corps (6) du distributeur dans la cage (5.) du distributeur a été modifiée,
caractérisée
en ce que le dispositif distributeur (1) de chauffage solaire est raccordé au capteur de température (9.2) situé dans l'arrivée (13) d'eau froide et au capteur de température (10) monté sur le collecteur/absorbeur solaire et, en présence d'une température supérieure à 4°C, un servomoteur (8), respectivement un robinet de commande (7) déplace le corps (6) du distributeur pour le mettre en position de passage vers le collecteur/absorbeur solaire et en ce qu'en présence d'une différence de température inférieure à 4°, le servomoteur (8), respectivement le robinet de commande (7) positionnent le corps (6) du distributeur dans le sens du passage vers la piscine.
